# DEMANDE DE BREVET EUROPEEN

(11) **EP 2 574 896 A2**
(43) Date de publication de la demande: **03.04.2013**
(21) Numéro de dépôt: 12380047.6
(22) Date de dépôt: 13.09.2012
(51) Int. Cl.: G01M 1/10, G01M 1/12

(54) **Dispositif pour déterminer les tenseurs d'inertie et les positions des centres de gravité en trois dimensions**

(30) Priorité: 28.09.2011 ES 201131564
(71) Demandeur: Fundación Centro de Tecnologias Aeronáuticas, 01510 Miñano Alava (ES)
(72) Inventeur: Martinez Goikolea, Aitor, 01510 Miñano (Alava) (ES); Espinosa Ruiz de Alegria, Aitor, 01510 Miñano (Alava) (ES); Fernandez Murguiondo, Etor, 01510 Miñano (Alava) (ES); Simon Martinez, José Luis, 01510 Miñano (Alava) (ES); Izaga Ugarriza, Joseba, 01510 Miñano (Alava) (ES); Herran Fernandez, Mikel, 01510 Miñano (Alava) (ES); Lopez Hernandez, Sergio, 01510 Miñano (Alava) (ES); Sáez de Ocariz Granja, Idurre, 01510 Miñano (Alava) (ES); Madruga Angulo, Oscar, 01510 Miñano (Alava) (ES)
(74) Mandataire: Urizar Barandiaran, Miguel Angel

(57) **Abrégé**

Dispositif servant à mesurer les centres de gravité et les tenseurs d'inertie d'une structure dans les trois dimensions spatiales avec un seul amarrage de la structure au dispositif, facilement ré-ajustable par l'utilisateur.

Ce dispositif se compose fondamentalement d'un mécanisme d'élévation (10) avec deux axes de rotation, permettant de positionner la structure (0) à mesurer dans toutes les orientations nécessaires ; un automatisme induisant un mouvement rotationnel dans le troisième axe de rotation du dispositif, composé par un moteur (16), un système de contrôle et d'acquisition (20) et des capteurs (18) et (19) et deux capteurs (3) et (19) facilement remplaçables, dont la position est ajustable.

L'application de ce dispositif est de préférence le calcul du tenseur d'inertie et la position de centre de gravité d'une structure, en trois dimensions.

## Description

L'objet de l'invention fait référence, globalement, à un dispositif de détermination du tenseur d'inertie et de la position du centre de gravité d'une structure en trois dimensions, avec un seul amarrage de la structure au dispositif.

Plus particulièrement, l'objet de l'invention fait référence à un banc d'essais avec deux axes de rotation disposés de manière à permettre d'orienter la structure vers toutes les positions nécessaires pour calculer le tenseur d'inertie et la position de son centre de gravité dans les trois dimensions spatiales. La position du centre de gravité s'obtient à partir des réactions qui permettent la stabilisation de la structure dans lesdites positions mesurées au travers de capteurs. Le tenseur d'inertie s'obtient à partir de mouvements précis générés par un automatisme programmable, formé par un moteur et un contrôleur, dans un troisième axe de rotation.

Dans l'état actuel de la technique, les dispositifs qui existent pour déterminer le tenseur d'inertie comme le centre de gravité doivent positionner la structure respectivement au dispositif au moins deux fois et utiliser un outillage supplémentaire, ce qui induit en erreur et provoque des risques pour la structure. Les méthodologies employées pour déterminer les paramètres mentionnés provoquent des erreurs que ne peuvent être corrigées que partiellement en utilisant des procédés de calcul et des mesures complexes qui augmentent le coût du développement et de l'utilisation du dispositif.

Une méthode communément employée pour déterminer le tenseur d'inertie consiste à générer le mouvement au travers de ressorts de torsion, mais le manque de linéarité dans sa constante de rigidité pour ses différents niveaux et directions de déformation provoque des erreurs dans la détermination des tenseurs d'inertie. Ceci implique à son tour une réduction dans le rang des tenseurs d'inertie mesurables imposée par la charge admissible sur le ressort de torsion, ce qui obligerait à le changer, avec le réajustement de conséquence du dispositif. D'autre part, pour ce type de dispositifs, une réduction dans le rang des tenseurs d'inertie mesurables se produit, due à la dépendance entre la période d'oscillation et la vitesse maximale de rotation qui oblige à s'en tenir à une période maximale afin d'éviter qu'une vitesse de rotation excessive ne provoque l'apparition de forces centrifuges nuisibles. Cette limitation à la période d'oscillation empêche d'obtenir les précisions désirées dans la mesure où l'influence de l'erreur commise dans la mesure de la période augmente si la période d'oscillation est réduite. Une réduction dans le rang des tenseurs d'inertie mesurables provient également suite à la limitation de la période d'oscillation imposée par la déformation admissible du ressort, ce qui obligerait à changer le ressort.

Les utilisateurs des dispositifs actuels qui ont besoin de grandes précisions pour des valeurs très différentes de charge se voient obligés de disposer de plusieurs dispositifs avec différents rangs opérationnels ou de réaliser des réajustements laborieux et risqués pour lesquels les dispositifs ne sont pas conçus.

Ainsi naît le besoin de créer un dispositif capable de déterminer avec une haute précision le centre de gravité et le tenseur d'inertie en trois dimensions. Le dispositif qui fait l'objet de l'invention résout cette problématique avec un seul amarrage de la structure pour éviter des erreurs de mesure et les risques pour la structure propre. Elle se caractérise par sa composition:
- un mécanisme d'élévation dans lequel est monté un support basculant avec possibilité de rotation et qui porte structure à mesurer; ladite structure se dispose sur un disque d'amarrage qui, à son tour, se trouve uni audit support basculant avec interposition d'un élément giratoire;
- un ensemble d'appuis qui porte la majeure partie du poids du support basculant et lui fournit une précision de rotation en adéquation avec la précision voulue pour déterminer le centre de gravité et le tenseur d'inertie;
- des capteurs de réaction dont les données permettent de déterminer le centre de gravité en fonction d'un axe rotatif horizontal;
- un cadre, qui porte un plateau d'amarrage qui tourne en fonction du premier, actionné par un moteur et qui soutient ledit mécanisme d'élévation avec une interposition de rails qui permettent son déplacement par rapport à un axe vertical de mesure de tenseurs d'inertie pour ajuster la position de tous les éléments soutenus par les rails propres par rapport audit axe vertical, afin de limiter les forces centrifuges et d'augmenter la précision de détermination du tenseur d'inertie;
- des capteurs de position qui, en coopération avec certains des capteurs d'orientation, sont chargés de mesurer la positions des éléments, soutenus par les rails, en fonction de l'axe vertical de mesure des tenseurs d'inertie;
- des capteurs qui mesurent la position, la vitesse, l'accélération angulaire et le couple de rotation que le moteur fournit au plateau d'amarrage; leurs données permettent de déterminer le tenseur d'inertie de la structure en fonction de l'axe vertical de mesure des tenseurs d'inertie, de telle manière que la détermination des Centres de Gravité et des tenseurs d'Inertie se réalise par le biais d'un seul amarrage de la structure au dispositif.

Sa caractéristique est également que l'axe horizontal rotatif et l'axe mesureur des tenseurs d'Inertie sont soutenus par des coussinets d'air, une sustentation magnétique ou des éléments roulants.

En outre, on dispose un deuxième plateau parallèle au plateau d'amarrage à une certaine distance de ce dernier et l'on dispose autour de cet ensemble des capteurs de force qui permettent de mesurer les forces radiales qui apparaissent lorsque l'on fait tourner la structure avec une vitesse de rotation constante, permettant de réaliser le balancement dynamique de la structure.

Le dispositif proposé possède une large gamme opérationnelle et une facilité à être réajusté par l'utilisateur, dans le but d'augmenter sa gamme et sa précision si besoin.

L'application prioritaire de l'invention est de déterminer le tenseur d'inertie et la position du centre de gravité d'une structure, en trois dimensions.

Le procédé de mesure et les calculs nécessaires afin de déterminer les paramètres mentionnés sont simples, ce qui permet à l'utilisateur de l'entretenir de manière adéquate et d'adapter le dispositif aux différentes structures soumises à la mesure sans dépendre du fabriquant.

Les principaux avantages du dispositif qui fait l'objet de la présente invention sont les suivants:
- Il permet de déterminer la position du centre de gravité et le tenseur d'inertie en trois dimensions avec un seul amarrage, ce qui évite l'outillage de positionnement supplémentaire et qui réduit les erreurs de mesure ainsi que les risques de manipulation de la structure.
- Le capteur qui fournit les données nécessaires pour déterminer la position du centre de gravité peut se déplacer et être changé facilement. Ceci permet d'optimiser la précision des mesures et de maximiser la gamme opérationnelle du dispositif en l'adaptant à différentes masses et positions du centre de gravité de chaque structure à mesurer.
- Le mouvement oscillatoire possède un axe de rotation vertical, en fonction duquel est orientée la structure dans toutes les positions nécessaires, évitant ainsi l'influence du poids de la structure dans la détermination du tenseur d'inertie, ce qui permet de simplifier les calculs et d'obtenir davantage de précision.

- Le mouvement oscillatoire s'obtient à travers un automatisme programmable, formé par un moteur et un contrôleur, et qui simule un ressort de torsion idéale, ce qui permet de:
   - Ajuster le mouvement oscillatoire par la programmation d'une constante de rigidité du ressort idéal qui est simulé, ce qui garantit la sécurité du spécimen en évitant l'apparition de forces centrifuges dangereuses, et en maximisant les précisions dans la détermination du tenseur d'inertie et du rang opérationnel du dispositif. Tout cela sans avoir à modifier la configuration du banc.
   - Éviter la dissipation d'énergie et le manque de linéarité dans la déformation des ressort de torsion réels, ce qui est pernicieux dans la précision des mesures.
   - Minimiser les autres types de dissipation d'énergie, comme par exemple celle produite par l'effet de l'air environnant.
   - Réaliser une détermination rapide et directe du tenseur d'inertie au travers du capteur de couple ou réaliser une mesure de haute précision du tenseur d'inertie à travers la période d'oscillation.

Ainsi, le contenu de la présente demande constitue une invention nouvelle qui implique une activité inventive et qui est susceptible d'être appliquée dans le milieu industriel.

Afin de mieux comprendre l'objet de la présente invention, on représente sur les plans une forme préférentielle de réalisation pratique, susceptible de changements accessoires ne dénaturant pas son fondement.

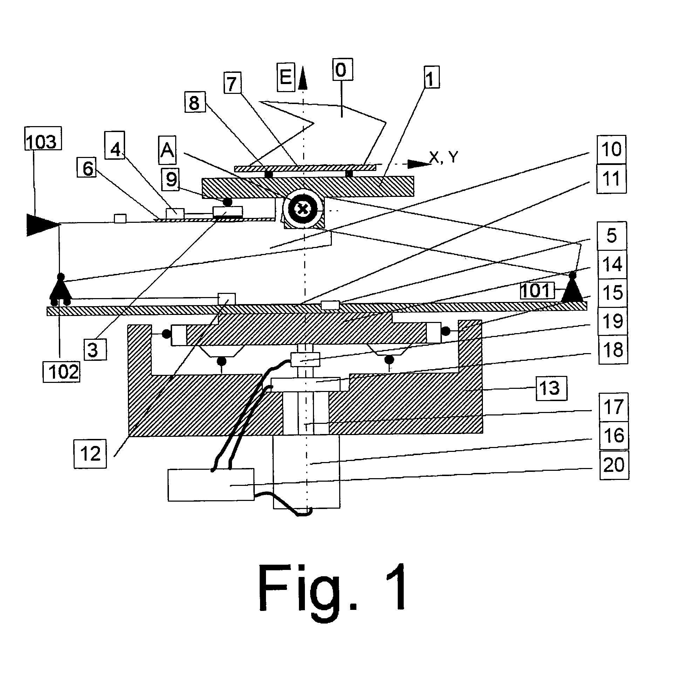

La figure 1 représente une coupe générale schématique du dispositif de détermination des centres de gravité et des tenseurs d'inertie en trois dimensions, objet de l'invention.

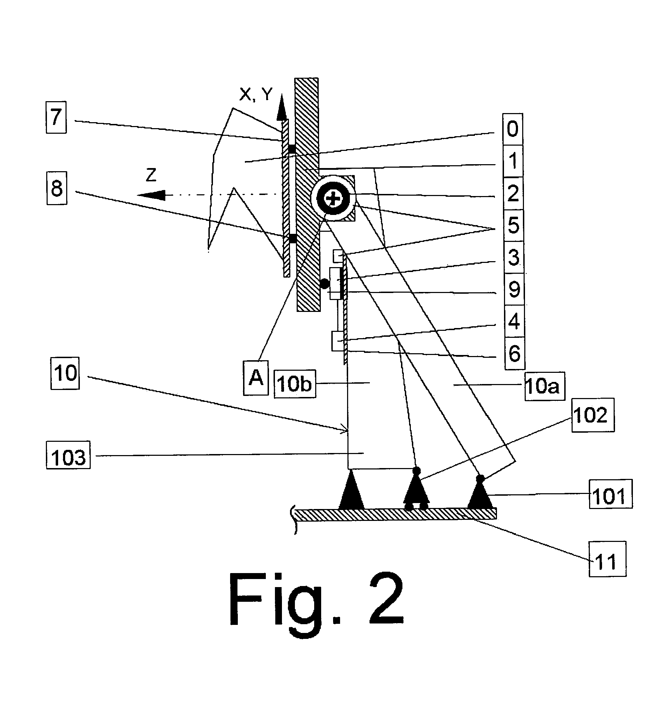

La figure 2 représente une vue partielle en coupe correspondant à la figure antérieure et où l'on voit la structure (0) tournée à 90° par rapport à la figure 1.

Nous décrirons ensuite un exemple de réalisation pratique, non limitative, de la présente invention. Nous ne rejetons aucunement d'autres modes de réalisation dans lesquels sont introduits des changements accessoires ne dénaturant pas son fondement; au contraire, la présente invention comprend également toutes leurs variantes.

Conformément à l'invention, le dispositif qui détermine les tenseurs d'inertie et les centres de gravité en trois dimensions inclut, essentiellement, les composants et les particularités suivantes:
0.- Structure
1.- Support basculant
2.- Appuis
3.- Capteur de réaction
4.- Capteur de position
5.- Capteurs d'orientation
6.- Rails solidaires du mécanisme d'élévation
7.- Disques d'amarrage
8.- Élément rotatif
9.- Accouplements
10.- Mécanisme d'élévation
11.- Rails solidaires du plateau d'amarrage
12.- Capteur de position
13.- Cadre Châssis
14.- Plateau d'amarrage
15.- Appuis
16.- Moteur
17.- Axe de sortie du moteur
18.- Capteur angulaire
19.- Capteur de réaction
20.- Système de contrôle et d'acquisition
101.- Appui articulé coulissant avec possibilité de blocage
102.- Appui articulé coulissant avec possibilité de blocage
103.- Butée

### A.- Axe horizontal rotatif

### E.- Axe vertical de mesure de Tenseurs d'Inertie.

La structure (0) dont on veut mesurer le Centre de Gravité et les tenseurs d'inertie doivent se fixer au disque d'amarrage (7) qui à son tour est uni au support basculant (1) au moyen d'un élément rotatif (8).

L'élément rotatif (8) permet au disque d'amarrage (7) et à la structure (0) de tourner en fonction du support basculant (1) afin de les orienter vers les positions dont on veut prendre les mesures. L'élément rotatif (8) sera placé dans les positions souhaitées lors de la réalisation de la mesure. La précision des superficies de la structure (0) qui permettent de la référencer en fonction du support basculant seront en concordance avec la précision souhaitée dans la détermination de son Centre de Gravité et de son tenseur d'inertie.

Le support basculant (1) n'a qu'un degré de liberté (une rotation) ; les autres degrés de liberté sont contraints par un ensemble d'appuis (2) qui ont la fonction additionnelle de soutenir la plus grande partie du poids du support basculant (1) et de la structure (0).

L'ensemble des appuis (2) confère au support basculant (1) une précision de rotation compatible avec le Centre de Gravité et le tenseur d'inertie que l'on souhaite déterminer, en maintenant une position de l'origine de référence du dispositif : l'axe horizontal rotatif (A).

Le frottement provoqué par l'ensemble d'appuis (2) sur le support basculant (1) sera compatible avec la précision souhaitée pour la détermination des paramètres mentionnés.

Au moyen d'un capteur (3), on applique une réaction connue sur le support basculant (1) qui restreint son dernier degré de liberté. Le point d'application et de direction de la réaction par rapport au support basculant (1) se découvre à travers les capteurs de position (4) et les capteurs d'orientation (5). En fonction des précisions recherchées, les caractéristiques de la réaction peuvent également être déterminées à partir des géométries et des postions angulaires des éléments auxquels le capteur de réaction (3) est attaché.

L'union entre le support basculant (1) et les capteurs de réaction (3) s'effectue avec les accouplements (9), ces accouplements empêchent les capteurs de réaction (3) de pâtir des charges anormales pour lesquelles ils ne sont pas conçus, et atteignent une grande précision dans leur comportement.

À leur tour, les capteurs de réaction (3) sont montés sur les rails (6), ce qui permet de les éloigner de l'axe horizontal rotatif (A) afin d'augmenter la gamme opérationnelle du dispositif ou de les rapprocher pour augmenter la précision.

Les rails (6) comme les accouplements (9) permettent de remplacer facilement les capteurs de réaction (3) sans nécessité d'ajustements, ce qui augmente la gamme opérationnelle et/ou la précision des capteurs comme du dispositif lui-même.

Les accouplements (9) permettent de réguler sa hauteur pour maintenir l'orientation du support basculant (1) vers les différentes situations de charge.

Les rails (6) et le groupe d'appuis (2) sont supportés par le mécanisme d'élévation (10) qui permet de tourner le support basculant (1) et la structure (0) à 90° par rapport à la verticale. Le mécanisme d'élévation (10) et l'élément rotatif (8) permettent d'orienter la structure (0) par rapport à la verticale vers toutes les positions nécessaires pour mesurer son tenseur d'inertie et son centre de gravité en trois dimensions.

Ledit mécanisme d'élévation (10) comporte deux bras (10a), (10b), articulés entre eux autour dudit axe horizontal rotatif (A) ; l'un des bras (10a) est rattaché aux rails (11) au travers d'articulations coulissantes qui peuvent être bloquées (101) et l'autre (10b) rattaché aux rails (11) au travers d'articulations coulissantes qui peuvent être bloquées (102) ; la position d'élévation maximale du mécanisme (10) s'établit grâce à des butées (103).

Connaissant la masse de la structure (0) et les réactions observées par les capteurs de réaction (3), on peut déterminer la position du centre de gravité de la structure (0) par rapport à l'axe horizontal rotatif (A) en trois dimensions.

Le mouvement oscillatoire qui permet de déterminer le tenseur d'inertie par rapport à l'axe de mesure des tenseurs d'inertie (E) s'effectue à travers un automatisme formé par le moteur (16) et le système de contrôle et d'acquisition (20). L'utilisateur pourra programmer les paramètres de mouvement oscillatoire en l'adaptant à son spécimen et aux précisions souhaitées.

Le mouvement du moteur (16) est transmis par son axe de sortie (17) jusqu'au plateau d'amarrage (14). Ce mouvement se mesure avec le capteur angulaire (18) qui fournit la position angulaire, la vitesse et l'accélération du plateau (14). Le couple fournit par le moteur (16) au plateau d'amarrage (14) se mesure avec un capteur de réaction (19).

Tout le poids du plateau d'amarrage (14) et des éléments qui sont dessus est porté par le groupe d'appuis (15) que porte à son tour le cadre (13) et qui ne permettent qu'un degré de liberté du plateau d'amarrage (14)

L'ensemble d'appuis (15) permet au plateau d'amarrage (14) une précision de rotation compatible avec la précision souhaitée pour la détermination du tenseur d'inertie, en maintenant la position de l'axe de mesure des tenseurs d'inertie (E).

Le frottement causé par l'ensemble d'appuis (15) sur le plateau d'amarrage (14) sera compatible avec la précision souhaitée pour la détermination du tenseur d'inertie.

Les rails (11), solidaires au plateau (14), ont comme fonction de soutenir le poids du mécanisme d'élévation (10) et de permettre son déplacement en fonction de l'axe de mesure des tenseurs d'inertie (E) afin d'ajuster la distance de tous les éléments soutenus par les rails eux-mêmes (11). L'objectif de ce réglage est de limiter les forces centrifuges à la capacité du dispositif et/ou d'augmenter la précision dans la détermination des tenseurs d'inertie. La position des éléments supportés par les rails (11) par rapport à l'axe de mesure des tenseurs d'inertie (E) se mesure avec le capteur de position (12) et l'un des capteurs d'orientation (5).

La capacité à orienter la structure (0) vers toutes les positions nécessaires avec les données fournies par le capteur angulaire (18) et le capteur de couple (19) permet de déterminer le tenseur d'inertie de la structure (0) en fonction de l'axe vertical de mesure de tenseurs d'inertie (E). En connaissant la position du Centre de Gravité, on peut calculer le tenseur d'inertie de la structure en fonction de son Centre de Gravité.

## Revendications

1. Dispositif pour déterminer les tenseurs d'inertie et les positions des centres de gravité en trois dimensions: caractérisé parce qu'il dispose de:
a) un mécanisme d'élévation (10) dans lequel se monte avec possibilité de rotation un support basculant (1) porteur de la structure (0) à mesurer; ladite structure (0) se dispose sur un disque d'amarrage (7) qui, à son tour, est rattaché audit support basculant (1) par l'interposition d'un élément rotatif (8), ce qui permet de fixer la structure vers toutes les orientations nécessaires pour déterminer le tenseur d'inertie et le centre de gravité en trois dimensions avec un seul amarrage;
b) un ensemble d'appuis (2), formés de coussinets d'air qui porte la plus grande partie du poids du support basculant (1) et lui confère une précision de rotation compatible avec la précision souhaitée pour la détermination du tenseur d'inertie et du Centre de Gravité à mesurer;
c) des capteurs de réaction (3) coulissants et qui se changent facilement, formant le point d'application et de direction des dites réactions, en fonction du support basculant (1), ajustables grâce à des accouplements (9) et découvertes par des capteurs additionnels ou une géométrie des parties impliquées. Les données de ces réactions permettent de déterminer la position du centre de Gravité par rapport à un axe horizontal rotatif (A);
d) Un plateau d'amarrage (14), soutenu par des coussinets d'air, qui tourne avec des mouvements programmables par rapport au cadre (13), par l'action d'un moteur (16) et qui soutient le mécanisme d'élévation (10) mentionné avec l'interposition de rails (11) en lui permettant de se déplacer par rapport à l'axe de mesure des tenseurs d'Inertie (E) pour ajuster la distance de tous les éléments soutenus par les rails mêmes (11) dans le but de limiter les forces centrifuges et d'augmenter la précision de la mesure des tenseurs d'inertie;
e) des capteurs de position (12) qui, en coopérant avec l'un des capteurs d'orientation (5), sont chargés de mesurer la position des éléments supportés par les guides (11) par rapport à l'axe de mesure des tenseurs d'inertie (E);
f) des capteurs qui fournissent la position, la vitesse, l'accélération angulaire et le couple que donne le moteur (16) au plateau d'amarrage (14) ; dont les données permettent de déterminer le tenseur d'inertie de la structure (0) par rapport à l'axe vertical de mesure de tenseurs d'Inertie (E);
de manière à ce que les mesures des Centres de Gravité et des tenseurs d'Inertie soient réalisées avec un seul amarrage de la structure (0) au dispositif.

2. Dispositif pour déterminer les tenseurs d'inertie et les positions des centres de gravité en trois dimensions : selon la revendication 1 ; **caractérisé par le fait que** l'axe horizontal rotatif (A) et l'axe de mesure des tenseurs d'Inertie (E) sont supportés par sustentation magnétique ou par des éléments roulants.

3. Dispositif pour déterminer les tenseurs d'inertie et les positions des centres de gravité en trois dimensions : selon une des revendications précédentes ; **caractérisé par le fait que**, de plus:
a) est disposé un second plateau parallèle au plateau d'amarrage (14), séparé de celui-ci à une certaine distance; et
b) que sont disposés des capteurs de force autour de ces plateaux d'amarrage;
de manière à permettre de mesurer les forces radiales qui apparaissent quand la structure (0) tourne à une vitesse de rotation constante et en pouvant réaliser le balancement dynamique de la structure (0).
